**Europäisches Patentamt**

**European Patent Office**

**Office européen des brevets**

(19)

(11) Veröffentlichungsnummer : **0 490 809 A1**

(12) **EUROPÄISCHE PATENTANMELDUNG**

(21) Anmeldenummer : **91810882.0**

(22) Anmeldetag : **14.11.91**

(51) Int. Cl.$^5$ : **A63C 11/08**, A63C 5/12, A63C 5/044

(30) Priorität : **12.12.90 CH 3929/90**

(43) Veröffentlichungstag der Anmeldung :
**17.06.92 Patentblatt 92/25**

(84) Benannte Vertragsstaaten :
**AT CH DE FR IT LI**

(71) Anmelder : **Gurit-Worbla AG**
**Papiermühlestrasse 155**
**CH-3063 Ittigen (CH)**

(72) Erfinder : **Geissbühler, Urs**
**Tannenhofstrasse 31**
**CH-3604 Thun (CH)**
Erfinder : **Kunz, Hans**
**Papiermühlestrasse 151**
**CH-3063 Ittigen (CH)**

(74) Vertreter : **Hepp, Dieter et al**
**Hepp, Wenger & Ryffel AG, Marktgasse 18**
**CH-9500 Wil (CH)**

(54) **Verfahren und Extrusionsdüse zum Herstellen eines Skibelags.**

(57) Zur Herstellung eines Skibelags wird in einer Schlitzdüse (10) ein Kunststoffband (14) durch Extrusion gebildet. Das zu extrudierende Kunststoffmaterial wird dabei in einem Haupt-strang (11) sowie in Nebenkanälen (12, 16) gefördert, so dass das Band auf wenigstens einer Flachseite mit Bahnen (15, 15a) eines zweiten Kunststoffmaterials versehen ist.

Fig 1

EP 0 490 809 A1

Die Erfindung betrifft ein Verfahren und eine Extrusionsdüse zur Herstellung eines Skibelags aus Kunststoff.

Skibeläge aus Kunststoff werden auf die verschiedensten Arten hergestellt. So sind beispielsweise sogenannte Schälverfahren bekannt, bei welchen ein gesinterter Kunststoff-Rohling mit einem Schälmesser aufgetrennt wird, wobei ein Kunststoffband entsteht, das sodann auf Länge geschnitten und zu Skibelägen verarbeitet wird.

Bei derartigen Verfahren lassen sich relativ einfach Mehrschicht-Beläge dadurch erzeugen, dass der Sinterblock aus einer Mischung von verschiedenen Kunststoffen (z.B. in Lagen) erzeugt wird.

Es ist auch bereits bekannt, Skibeläge im Extrusionsverfahren herzustellen. Dabei wird ein endloses Kunststoffband erzeugt, bei dem sodann meist einseitig durch Oberflächenbehandlung (z.B. Schleifen) eine für das Verbinden, insbesondere das Verkleben mit dem Ski geeignete Oberfläche erzeugt wird.

Im Hinblick auf die sehr geringe Dicke von Skibelägen sind bisher nur solche Verfahren zur Erzeugung eines Mehrschicht-Skibelags in Extrusionstechnik bekannt geworden, bei denen verschiedene Kunststoffe in voller Schlitzbreite übereinander extrudiert wurden, um quasi einen Sandwich-Aufbau zu erhalten. Die Erfindung zielt darauf ab, Beläge aus unterschiedlichen Materialien zu erzeugen, bei denen z.B. auch die Lauffläche verschiedene Materialien aufweist.

Erfindungsgemäss wird diese Aufgabe vor allem gemäss Kennzeichen der unabhängigen Patentansprüche gelöst. Dabei wird auf optimal einfache Weise die Ko-Extrusion eines Skibelags dadurch ermöglicht, dass das zweite Extrudat dem Haupt-Extrusionsstrang in einzelnen Bahnen und/oder intermittierend zugeführt wird. Dadurch wird erreicht, dass ein Mehrschichten-Belag erzeugt wird, der eine Vielzahl von Bahnen aufweist, die dem Haupt-Extrusionsstrang zugeführt werden.

Besonders einfach lässt sich das erfindungsgemässe Verfahren verwirklichen, wenn dem Haupt-Extrusionsstrang, in welchem ein erstes Kunststoff-Extrudat einer Schlitzdüse zugeführt wird, von wenigstens einer Flachseite der Schlitzdüse her ein zweites Extrudat in einzelnen Bahnen und/oder intermittierend zugeführt wird und wenn die vermischten Kunststoffstränge durch die Schlitzdüse als Band extrudiert werden.

Auf diese Weise lassen sich Kunststoffbahnen herstellen, die in Längs- und/oder Querrichtung der Bahn bzw. des daraus hergestellten Skibelags ko-extrudierte Bahnen eines zweiten oder auch eines dritten Kunststoffes enthalten. Durch entsprechende Material- und/oder Farbkombinationen lassen sich sowohl die Eigenschaften des Skibelags beeinflussen als auch farblich ansprechende Beläge erzeugen.

Besonders vorteilhaft ist es, wenn das so erzeugte Band auf der Oberflächenseite, auf der das zweite Extrudat zugeführt wurde, mit einer Vorbehandlung für das Verkleben mit dem Ski bearbeitet, insbesondere geschliffen wird. Dabei lässt sich dann z.B. ein transparenter Kunststoff im Hauptextrusionsstrang extrudieren, dem von einer Seite her der zweite Kunststoff in einzelnen Bahnen zugeführt wird. Auf der Seite, auf der die verschiedenen Kunststoffe nebeneinander angeordnet sind, wird geschliffen und verklebt, während auf der gegenüberliegenden Seite eine homogene Oberfläche aus dem Kunststoff des Hauptstrangs gebildet wird. Dabei schimmert der zweite Kunststoff, sofern er farblich abgesetzt ist, durch den transparenten Kunststoff des Hauptstrangs durch.

Selbstverständlich kann auch der umgekehrte Weg beschritten werden, d.h. dass zur gezielten Beeinflussung der Laufeigenschaften durch Verwendung von zwei oder mehreren Kunststoffen diese in Bahnen und/oder intermittierend auf der Laufseite dem Hauptextrusionsstrang zugeführt werden.

Auch bei beidseitiger Zuführung von Nebensträngen lassen sich sowohl auf einfache Weise die Lauf- und Festigkeitseigenschaften des Belags als auch der optische Eindruck beeinflussen.

Die Erfindung ist im folgenden in Ausführungsbeispielen anhand der Zeichnungen näher erläutert. Es zeigen:

Fig. 1 die schematische Ansicht eines Extruders mit Schlitzdüse zur Durchführung des erfindungsgemässen Verfahrens,

Fig. 2 einen Schnitt durch die Schlitzdüse gemäss Linie I-I in Figur 1,

Fig. 3 einen Schnitt längs der Linie II-II in Figur 2,

Fig. 4 die schematische Darstellung einer abgewandelten Ausführungsform einer Schlitzdüse mit den Merkmalen der Erfindung,

Fig. 5 einen Schnitt längs der Linie III-III in Figur 4,

Fig. 6 einen Ausschnitt in vergrössertem Massstab aus einem Schnitt durch eine extrudierte Bahn längs der Linie IV-IV in Figur 2,

Fig. 7 die Bahn gemäss Figur 6 nach der Oberflächenbearbeitung,

Fig. 8 die vergrösserte, ausschnittsweise Darstellung eines Schnitts durch eine extrudierte Bahn längs der Linie V-V in Figur 4,

Fig. 9 die Darstellung eines Schnitts längs der Linie VI-VI in Figur 8,

Fig.10 eine Draufsicht auf die Bahn gemäss Figur 9 mit einem Teilschnitt längs der Linie VII-VII in verkleinertem Massstab,

Fig.11 eine Draufsicht auf einen Skibelag in abgewandelter Form,

Fig.12 eine Schlitzdüse mit beweglichen Nebenkanälen, und

Fig.13 einem mit der Schlitzdüse gemäss Fig. 12 hergestellten Belag im Schnitt.

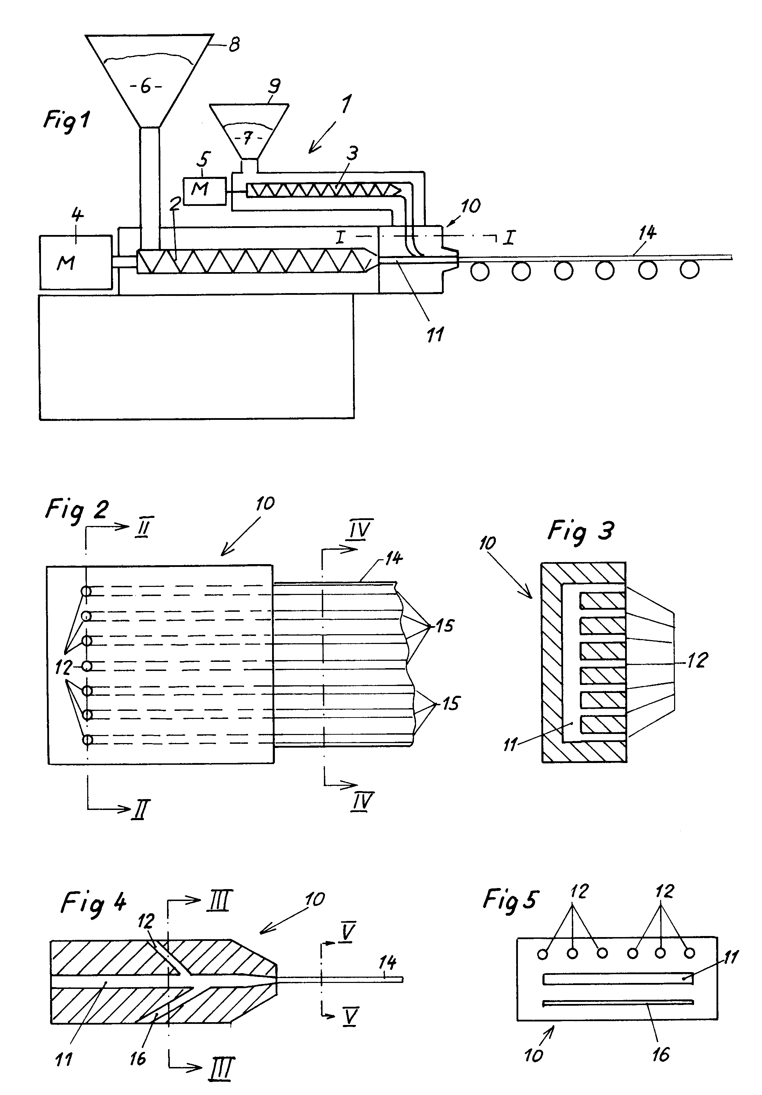

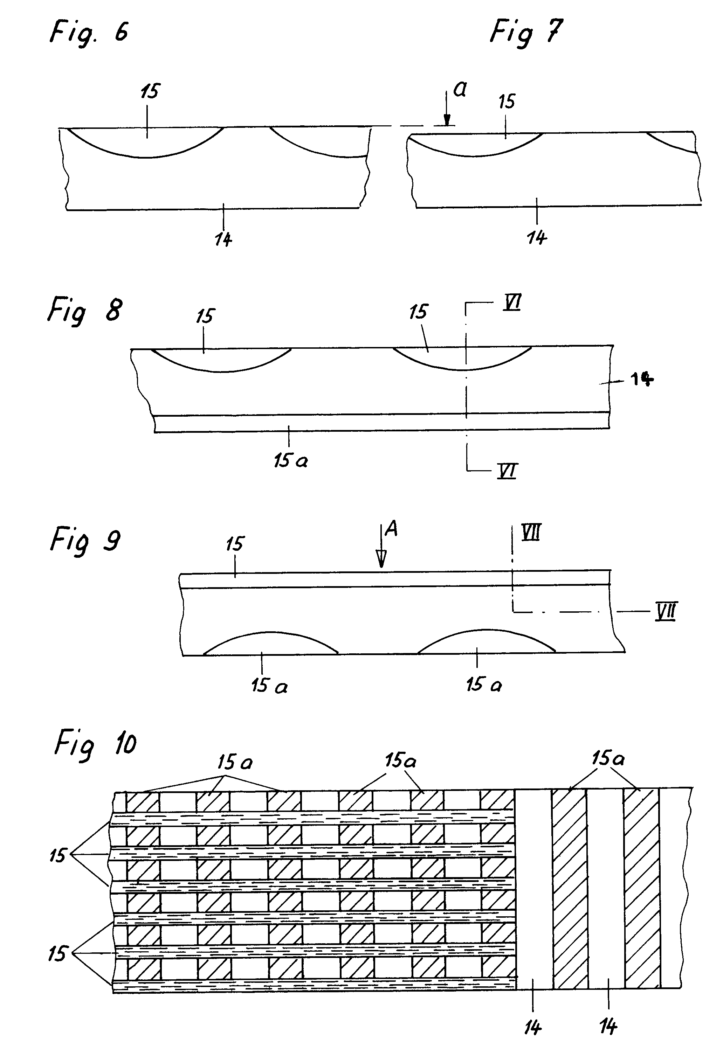

Gemäss Figur 1 ist ein schematisch dargestellter Extruder 1 in bekannter Weise mit zwei Extrusionsschnecken 2 und 3 versehen, die jeweils durch einen Antriebsmotor 4 bzw. 5 angetrieben werden. Jeder der Extrusionsschnecken 2, 3 wird Kunststoffgranulat 6, 7 von einem Trichter 8 bzw. 9 zugeführt. Die Extrusionsschnecken 2 und 3 sind in bekannter Weise in einem Kanal angeordnet, der durch eine nicht dargestellte Heizeinrichtung so aufgeheizt wird, dass das Kunststoffgranulat 6, 7 bei der Förderung durch die Extrusionsschnecken 2, 3 schmilzt und in plastischem, verformbarem Zustand einer Schlitzdüse 10 zugeführt wird. Die Extrusionsschnecke 2 liefert dabei das Kunststoffmaterial für den Hauptstrang 11 (Figur 1 bis 5) in der Schlitzdüse 10, während die Extrusionsschnecke 3 Kunststoffmaterial an eine Vielzahl von Nebenkanälen 12 (Figur 2 und 3) liefert. Im Betriebsablauf wird dadurch in der Schlitzdüse 10 ein kontinuierlich extrudiertes Kunststoffband 14 erzeugt, dessen Unterseite durchgehend aus dem von der Extrusionsschnecke 2 erzeugten Material besteht und dessen Oberseite mit einer Vielzahl von einzelnen Bahnen 15 aus dem von der Extrusionsschnecke 3 zugeführten Material versehen ist. Die Form der Bahnen 15, die Dicke des Bands 14 und der relative Materialanteil der Kunststoffgranulate 6 bzw. 7 lässt sich je nach Anwendungsfall bestimmen. Gemäss Figur 6 verlaufen die Bahnen 15 an der Oberseite des Bands 14, wobei das von der Extrusionsschnecke 2 geförderte Material transparent ist, während das von der Extrusionsschnecke 3 gelieferte Kunststoffmaterial eingefärbt ist. Die Bahnen 15 schimmern dementsprechend durch das Band 14.

Figur 6 zeigt das Band nach der Extrusion während Figur 7 das Band 14 nach einer Nachbehandlung (Schleifen) darstellt, bei welcher die Dicke a von der Oberfläche des Bands 14 abgeschliffen wurde. Durch diesen Schleifvorgang wird die Oberfläche absolut plan und erhält ausserdem eine Rauhigkeit, die das Verkleben mit der Unterseite eines Skis ermöglicht.

Aus Figur 2 (Schnitt längs der Linie I-I in Figur 1) ist besonders gut ersichtlich, wie die einzelnen Bahnen 15 durch die Nebenkanäle 12 auf dem Band 14 erzeugt werden.

Figur 3 zeigt einen schematischen Schnitt längs der Linie II-II in Figur 2. Daraus wird ersichtlich, wie die Nebenkanäle 12 von einer Flachseite her in der Schlitzdüse 10 dem Hauptstrang 11 zugeführt werden.

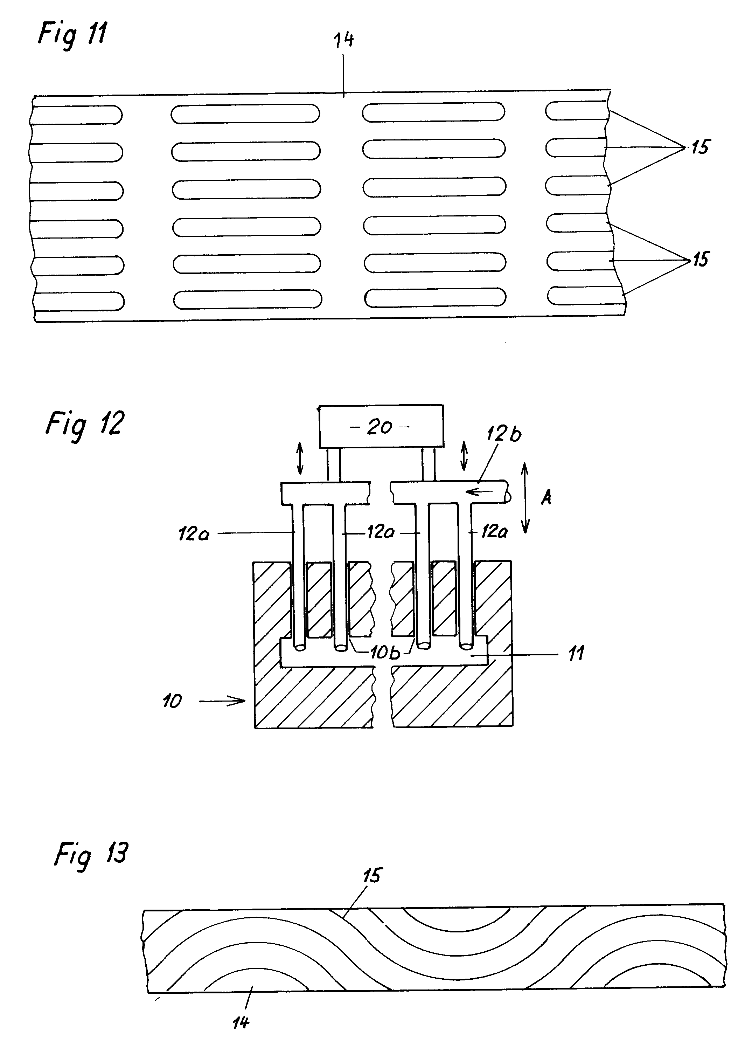

Beim abgewandelten Ausführungsbeispiel gemäss Figur 4 und 5 sind in der Schlitzdüse 10 analog Figur 1 bis 3 ein Hauptstrang 11 sowie eine Mehrzahl von Nebenkanälen 12 vorgesehen. Ausserdem ist ein weiterer Nebenstrang 16 in der Schlitzdüse 10 so angeordnet, dass er von unten her in den Hauptstrang 11 mündet. Das Kunststoffmaterial wird in den Nebenkanälen 12 kontinuierlich, dagegen im Nebenstrang 16 intermittierend dem Hauptstrang 11 beigemischt. Auf diese Weise ergibt sich gemäss Figur 8 und 9 ein Band 14, bei welchen analog Figur 5 und 7 auf der Oberseite in Längsrichtung verlaufende Bahnen 15, auf der Unterseite dagegen quer verlaufende Bahnen 15a gebildet werden. Wie sich aus Figur 10 ergibt, ist aufgrund der Transparenz des Kunststoffmaterials des Hauptstrangs 11 das Muster der sich überkreuzenden Bahnen 15 und 15a (eingefärbt) durchscheinend.

Figur 11 zeigt das Ausführungsbeispiel eines Bands 14, das mit einer Schlitzdüse gemäss Figur 1 bis 3 erzeugt wird. Die Bahnen 15 aus dem zweiten Kunststoffmaterial sind dabei jedoch unterbrochen, weil die Zufuhr des Kunststoffmaterials von der Extrusionsschnecke 3 intermittierend gestaltet wurde (ähnlich Figur 10).

Figur 12 zeigt die schematische Schnittdarstellung einer Extrustionsdüse 10, bei welcher in den Hauptstrang 11 rohrförmig ausgebildete Nebenkanäle 12a münden. Die Nebenkanäle 12a sind als rohrförmige Düsen ausgebildet, die in Bohrungen 10b in der Schlitzdüse 10 derart gelagert sind, dass sie relativ zum Hauptstrang 11 in Richtung des Pfeils A aufwärts bzw. abwärts bewegt werden können. Dies geschieht durch eine schematisch dargestellte hydraulische Antriebseinrichtung 20, die mit einem Zufuhr-Strang 12b für die Nebenstränge 12a verbunden ist.

Figur 13 zeigt, wie durch eine derartige Aufwärts- und Abwärts-Bewegung der Nebenkanäle 12a die Bahnen 15 des zweiten Kunststoffmaterials wellenförmig im Band 14 verteilt werden. Das zweite Kunststoffmaterial 15 kann dabei intermittierend oder kontinuierlich zugeführt werden. Selbstverständlich können die Nebenstränge 12a auch derart ausgebildet werden, dass sich eine in Querrichtung des Bands 14 eine durchgehende Bahn 15 des zweiten Kunststoffmaterials ergibt, die kontinuierlich oder intermittierend in Längsrichtung des Bands 14 verläuft und dabei eine Wellenbewegung macht. Auf diese Weise lassen sich besonders gut Beläge herstellen, bei denen die Eigenschaften der verschieden Kunststoffmaterialien variabel und entsprechend dem Anwendungsfall zum Einsatz kommen.

Ersichtlicherweise lässt sich durch die erfindungsgemässe Anordnung und das neue Verfahren eine Vielzahl von Beimischungsformen verschiedener Kunststoffe erzeugen und dadurch das physikalische Verhalten des Skibelags fast unbegrenzt modifizieren. Intermittierendes Beimengen des Kunststoffs lässt sich in bekannter Weise durch entsprechende Ansteuerung der Antriebsmotoren, vor allem des Antriebsmotors 5 für die Extrusionsschnecke 3 bewirken. Einrichtungen für derartige Steueraufgaben sind dem Fachmann bekannt und geläufig.

**Patentansprüche**

1.  Verfahren zum Herstellen eines Skibelags aus Kunststoff im Extrusionsverfahren, wobei in einem Hauptextrusionsstrang (11) ein erstes Extrudat einer Schlitzdüse (10) zugeführt wird und wobei dem Hauptextrusionsstrang (11) ein zweites Extrudat in einzelnen Bahnen (15, 15a) und/oder intermittierend zugeführt wird.

2.  Verfahren nach Anspruch 1, gekennzeichnet durch folgende Verfahrensschritte:
    a) In einem Hauptextrusionsstrang (11) wird ein erstes Kunststoffextrudat einer Schlitzdüse (10) zugeführt;
    b) dem Hauptstrang des ersten Extrudats wird von wenigstens einer Flachseite der Schlitzdüse (10) her ein zweites Extrudat in einzelnen Bahnen (15, 15a) und/oder intermittierend zugeführt;
    c) die verschmischten Kunststoffstränge werden durch die Schlitzdüse (10) als Band (14) extrudiert;
    d) das Band (14) wird auf der Oberflächenseite, auf der das zweite Extrudat zugeführt wurde, mit einer Vorbehandlung für das Verkleben mit einem Ski bearbeitet, insbesondere geschliffen.

3.  Verfahren nach einem der vorangehenden Ansprüche, dadurch gekennzeichnet, dass das zweite Extrudat in bezug auf das erste Extrudat in im querschnitt auf- und absteigenden Bahnen (15a) zugeführt wird.

4.  Extrusionsdüse zur Herstellung eines Skibelags aus Kunststoff mit einem Hauptextrusionskanal (11) zur Bildung eines bandförmigen Körpers (14), wobei in den Hauptextrusionskanal (11) von wenigstens einer Flachseite der Düse 10 her wenigstens ein Nebenkanal (12, 16) zur bahnförmigen und/oder intermittierenden Zuführung eines zweiten Extrudats mündet.

5.  Extrusionsdüse nach Anspruch 4, dadurch gekennzeichnet, dass eine Mehrzahl von Nebenkanälen (12) dem Hauptextrusionskanal (11) von wenigstens einer Flachseite her zugeführt wird.

6.  Extrusionsdüse nach Anspruch 4 oder 5, dadurch gekennzeichnet, dass der bzw. die Nebenkanäle (12a) im Hauptstrang (11) verschiebbar bzw. beweglich angeordnet sind.

7.  Verwendung einer Ko-Extrusionsschlitzdüse zur Herstellung eines Skibelags mit einem Hauptstrang (11) zur Bildung eines ersten Extrusionsstrangs aus einem ersten Extrudat und wenigstens einem Nebenstrang (12, 16) zur Zuführung eines zweiten Extrudats zum Hauptstrang (11).

EP 0 490 809 A1

Fig 1

Fig 2

Fig 3

Fig 4

Fig 5

5

Fig. 6

Fig 7

15

14

a

15

14

Fig 8

15

15

VI

14

15 a

VI

Fig 9

15

A

VII

VII

15 a

15 a

Fig 10

15a

15a

15a

15

15

14

14

Fig 11

14

15

15

Fig 12

- 20 -

12 b

12 a

12 a

12 a

A

10 b

11

10

Fig 13

15

14

**Europäisches Patentamt**

# EUROPÄISCHER RECHERCHENBERICHT

Nummer der Anmeldung

EP    91 81 0882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 343 582 (ROCCHI)<br>* Seite 4, Zeile 25 - Zeile 27; Abbildungen 1,10.12 *<br>--- | 1-4,7 | A63C11/08<br>A63C5/12<br>A63C5/044 |
| A | DE-A-2 217 888 (KIMBERLY-CLARK CORP)<br>* Abbildung S21 *<br>--- | 1,4,7 | |
| A | LU-A-86 161 (SIAMP-CEDAP)<br>* Seite 7, Zeile 7 - Zeile 15; Abbildung 3 *<br><br>----- | 1,5 | |
| | | | **RECHERCHIERTE SACHGEBIETE (Int. Cl.5 )**<br><br>A63C<br>B29C |

Der vorliegende Recherchenbericht wurde für alle Patentansprüche erstellt

| Recherchenort | Abschlußdatum der Recherche | Prüfer |
|---|---|---|
| DEN HAAG | 13 FEBRUAR 1992 | STEEGMAN R. |